# EUROPEAN PATENT APPLICATION

(11) **EP 1 927 675 A1**
(43) Date of publication of application: **04.06.2008**
(21) Application number: 07119960.8
(22) Date of filing: 05.11.2007
(51) Int. Cl.: C23C 18/12, C23C 28/00, C23C 30/00, F01D 5/28, F01D 25/00

(54) **Ceramic corrosion resistant coating for oxidation resistance**

(30) Priority: 08.11.2006 US 557693
(71) Applicant: General Electric Company, Schenectady, NY 12345 (US)
(72) Inventor: Hazel, Brian Thomas, West Chester, OH 45069 (US); Pfaendtner, Jeffrey, Blue Ash, OH 45242 (US); Mcevoy, Kevin Paul, Ballston Spa, NY 12020 (US); Nagaraj, Bangalore Aswatha, West Chester, OH 45069 (US)
(74) Representative: Szary, Anne Catherine

(57) **Abstract**

A coating (403) and a method for forming the coating (403), the method including coating a surface of a gas turbine engine turbine component having a metallic surface that is outside the combustion gas stream and exposed to cooling air during operation of the engine. A gel-forming solution including a ceramic metal oxide precursor is provided. The gel-forming solution is heated to a first preselected temperature for a first preselected time to form a gel. The gel is then deposited on the metallic surface. Thereafter the gel is fired at a second preselected temperature above the first preselected temperature to form a ceramic corrosion resistant coating (403) comprising a ceramic metal oxide is selected from the group consisting of zirconia, hafnia and combinations thereof. The ceramic corrosion resistant coating (403) having a thickness of up to about 127 microns and remaining adherent at temperatures greater than about 1000 °F.

## Description

The present invention relates generally to coatings for turbine components in gas turbine engines. In particular, the present invention includes coatings for under-platform areas and areas not directly in the combustion gas path of the high pressure turbine of a gas turbine engine.

The operating temperature within a gas turbine engine is both thermally and chemically hostile. Significant advances in high temperature capabilities have been achieved through the development of iron, nickel and cobalt-based superalloys and the use of environmental coatings capable of protecting superalloys from oxidation, hot corrosion, etc., but coating systems continue to be developed to improve the performance of the materials.

In the compressor portion of an aircraft gas turbine engine, atmospheric air is compressed to 10-25 times atmospheric pressure, and adiabatically heated to 800° - 1250° F (427° C - 677° C) in the process. This heated and compressed air is directed into a combustor, where it is mixed with fuel. The fuel is ignited, and the combustion process heats the gases to very high temperatures, in excess of 3000° F (1650° C). These hot gases pass through the turbine, where airfoils fixed to rotating turbine disks extract energy to drive the fan and compressor of the engine, and the exhaust system, where the gases provides sufficient thrust to propel the aircraft. To improve the efficiency of operation of the aircraft engine, combustion temperatures have been raised. Of course, as the combustion temperature is raised, steps must be taken to prevent thermal degradation of the materials forming the flow path for these hot gases of combustion.

Aircraft gas turbine engines have a so-called High Pressure Turbine (HPT) to drive the compressor. The HPT is located immediately aft of the combustor in the engine layout and experiences the highest temperature and pressure levels (nominally - 3000° F (1850° C) and 300 psia, respectively) developed in the engine. The HPT also operates at very high rotational speeds (10,000 RPM for large high-bypass turbofans, 50,000 for small helicopter engines). There may be more than one stage of rotating airfoils in the HPT. In order to meet life requirements at these levels of temperature and pressure, HPT components are air-cooled, typically from bleed air taken from the compressor, and are constructed from high-temperature alloys.

Demand for enhanced performance continues to increase. This demand for enhanced performance applies for newer engines and modifications of proven designs. Specifically, higher thrusts and better fuel economy are among the performance demands. To improve the performance of engines, the combustion temperatures have been raised to very high temperatures. This can result in higher thrusts and/or better fuel economy. These combustion temperatures have become sufficiently high that even superalloy components not within the combustion path have been subject to degradation. These "under-platform" surfaces, while exposed to cooling air are not within the direct flow of the combustion gas. Important under-platform surfaces subject to degradation as a result of the increased combustion temperatures include, but are not limited to, turbine blade shanks, underside surfaces of turbine blade platforms, dovetail sections of the turbine blade, under-platform surfaces of turbine vanes, under-platform surfaces of turbine shroud structures, internal passageways of turbine blades and internal passageways of turbine vanes. These superalloy component surfaces have been subject to degradation by mechanisms not previously generally experienced, creating previously undisclosed problems that must be solved.

The portion of the turbine blade and the other turbine components below the platform (i.e., under-platform) experience a combination of centrifugal stresses due to the rotation of the turbine and the high temperatures of the turbine. In addition, metal salts such as alkaline sulfate, sulfites, chlorides, carbonates, oxides, and other corrodant salt deposits resulting from ingested dirt, fly ash, volcanic ash, concrete dust, sand, sea salt, etc., are a major source of the corrosion. Other elements in the aggressive bleed gas environment (e.g., air extracted from the compressor to cool hotter components in the engine) can also accelerate the corrosion. Alkaline sulfate corrosion in the temperature range and atmospheric region of interest results in pitting corrosion of under-platform surfaces at temperatures typically starting about 1200° F (649° C). This pitting corrosion has been shown to occur on important turbine blade and other under-platform surfaces. The oxidation and corrosion damage can lead to premature removal and replacement of the turbine blade, vane or shroud unless the damage is reduced or repaired.

Components formed from iron, nickel and cobalt-based superalloys cannot withstand long service exposures if located in certain sections of a gas turbine engine, such as the LPT and HPT sections. A common solution is to provide such components with an environmental coating of diffusion aluminide, noble metal modified diffusion aluminide or overlay aluminide. Other suitable environmental coating include MCrAlX overlay coatings wherein M refers to nickel, cobalt, iron or combinations thereof and X denotes elements such as hafnium, zirconium, yttrium, tantalum, rhenium, platinum, silicon, titanium, boron, carbon, and combinations thereof. Diffusion aluminide coatings are generally formed by such methods as chemical vapor deposition (CVD), slurry coating, pack cementation, above-the-pack, or vapor (gas) phase aluminide (VPA) deposition into the superalloy. Another environmental coating for use in certain sections of the gas turbine engine include the aluminide or platinum aluminide coatings present on under-platform surfaces of the turbine blade, as disclosed in U.S. Patent No. 6,296,447, which is herein incorporated by reference in its entirety. During high temperature exposure in air, a thin protective aluminum oxide containing scale or layer that inhibits oxidation of the diffusion coating and the underlying substrate forms over the additive layer. While providing good protection against oxidation and modest protection against hot corrosion, the diffusion aluminide suffers from some drawbacks when applied to the under-platform portion of the turbine section. The aluminide coating has proven insufficient in preventing corrosion in certain component locations with high corrosion rates. For example, aluminide and noble metal modified aluminide coatings applied to the under platform location of high pressure turbine blades where corrosive species are prone to accumulate in large quantities have not been sufficient to prevent corrosion in several applications. The aluminide coating can also have a detrimental effect on the mechanical properties of the underlying substrate. For example, the aluminide coating reduces the fatigue life of the substrate at temperatures below its ductile to brittle transition temperature (DBTT) on which the coating is deposited. At lower operating temperatures, below the DBTT, aluminide coatings have minimal ductility that may be less than the local operating strains of the component. This lack of ductility could lead to cracks in the coating during operation, which may propagate under further loading. Additionally, these cracks can act as paths for corrosion product to react directly with the substrate that has poor corrosion resistance.

Without the deposition of a corrosion resistant coating onto the corrosion prone sections of the high pressure turbine components, the operable life of the component may be severely limited. In these instances, cracking, resulting from corrosion initiated fatigue, may occur in these areas, such as the shank region of the high pressure turbine.

Application methods, such as Air Plasma Spray (APS) and Electron Beam Physical Vapor Deposition (EB-PVD), while capable of depositing ceramic coatings, are undesirable for some under-platform component surfaces, due to the properties of coatings resulting from APS and EB-PVD processes. Specifically, the APS process includes a variability of the thickness across the surface of a complex geometry substrate making the formation of a thin coating difficult or impossible. The EB-PVD process forms a coating having a columnar structure, which provides paths for penetration of corrosion through the coating. In addition, both APS and EB-PVD are line of sight processes and may be insufficient for coating certain regions of the component (e.g. internal cooling passages in the shank region).

What is needed is a coating system for use in the high pressure turbine section of the gas turbine engine that provides resistance to corrosion that does not substantially affect the properties of the turbine blade and is easily applied to surfaces. The present invention provides this advantage as well as other related advantages.

One embodiment of the present invention includes a coating system and a method for forming the coating system, the method including coating a surface of a gas turbine engine component having a metallic surface that is outside the combustion gas stream and exposed to cooling air during operation of the engine. A gel-forming solution including a ceramic metal oxide precursor is provided. The gel-forming solution is heated to a first preselected temperature for a first preselected time to form a gel. The gel is then deposited on the metallic surface. Thereafter the gel is fired at a second preselected temperature above the first preselected temperature to form a ceramic corrosion resistant coating comprising a ceramic metal oxide selected from the group consisting of zirconia, hafnia, alumina and combinations thereof. The ceramic corrosion resistant coating has a thickness of up to about 127 microns and remains adherent at temperatures greater than about 1000 °F (538°C).

An advantage of an embodiment of the present invention is that the coating of the present invention is easily applied to a variety of surfaces, including exterior and interior surfaces of turbine blades subject to corrosion due to exposure to contaminants present in cooling air.

Another advantage of an embodiment of the present invention is that the coating of the present invention is thin and has a low density that does not appreciably add to the centrifugal stress experienced by the turbine components.

Yet another advantage of an embodiment of the present is that the coating of present invention may be easily masked to apply the coating on the desired surfaces, while avoiding deposition in areas where ceramic coating may be undesirable.

Yet another advantage of an embodiment of the present invention is that surfaces provided with the coating of the present invention may reduce or eliminate the need for aluminide coatings on some turbine component surfaces, allowing substrates to retain mechanical properties.

Yet another advantage of an embodiment of the present invention is that surfaces provided with the coating of the present invention may include complex geometries that may be uniformly coated.

Yet another advantage of an embodiment of the present invention is that surfaces provided with the thin, dense coating are resistant to hot corrosion, and the coating has little or no effect on the mechanical properties of the underlying substrate.

Yet another advantage of an embodiment of the present invention is that the process of the present invention may be performed inexpensively, utilizing simple process steps that are less labor intensive, and using relatively inexpensive and available materials and equipment.

Other features and advantages of the present invention will be apparent from the following more detailed description of the preferred embodiment, taken in conjunction with the accompanying drawings which illustrate, by way of example, the principles of the invention and in which:-
FIG. 1 is a perspective view of a turbine blade according to an embodiment of the present invention.
FIG. 2 is a cutaway view of a turbine blade engaged with a turbine disk according to an embodiment of the present invention.
FIG. 3 is a cutaway view of a high pressure turbine section of a gas turbine engine according to an embodiment of the present invention.
FIG. 4 is an enlarged view of a coating system according to the present invention.
FIG. 5 is an enlarged view of a coating system according to an alternate embodiment of the present invention.

Wherever possible, the same reference numbers are used throughout the drawings to refer to the same or like parts.

One embodiment of the present invention includes a coating system comprising a ceramic corrosion resistant coating comprising a ceramic metal oxide and a method for providing a ceramic corrosion resistant coating to an under-platform surface or internal surface of a turbine section of a gas turbine engine.

As used herein, the term "ceramic corrosion resistant coating" refers to coatings of this invention that provide resistance against corrosion caused by various corrodants, including metal (e.g., alkaline) sulfates, sulfites, chlorides, carbonates, oxides, and other corrodant salt deposits resulting from ingested dirt, fly ash, volcanic ash, concrete dust, sand, sea salt, etc., at temperatures typically of at least about 1000° F (538° C), more typically at least about 1200° F (649° C), and which comprise ceramic metal oxide. The ceramic corrosion resistant coatings of this invention usually comprise at least about 60 mole % ceramic metal oxide, typically from about 60 to about 100 mole % ceramic metal oxide, and more typically from about 94 to about 100 mole % ceramic metal oxide. The ceramic corrosion resistant coatings of this invention further typically comprise a stabilizing amount of a stabilizer metal oxide for the ceramic metal oxide. Suitable stabilizer metal oxides may be selected from the group consisting of yttria, calcia, scandia, magnesia, india, rare earth oxides, including gadolinia, neodymia, samaria, dysprosia, erbia, ytterbia, europia, and praseodymia, lanthana, tantala, titania, and mixtures thereof. The particular amount of this stabilizer metal oxide that is "stabilizing" will depend on a variety of factors, including the stabilizer metal oxide used, the ceramic metal oxide used, etc. Typically, the stabilizer metal oxide comprises from about 2 to about 40 mole %, more typically from about 3 to about 6 mole %, of the ceramic corrosion resistant coating. The ceramic corrosion resistant coatings used herein typically comprise yttria as the stabilizer metal oxide.

See, for example, Kirk-Othmer's Encyclopedia of Chemical Technology, 3rd Ed., Vol. 24, pp. 882-883 (1984) incorporated herein by reference in its entirety for a description of suitable yttria-stabilized zirconia-containing ceramic compositions that can be used in the ceramic corrosion resistant coatings of this invention. The stabilizer metal oxide may be formed from a stabilizer metal oxide precursor compound, such as yttrium methoxide.

Ceramic metal oxides for use in the ceramic corrosion resistance may include zirconia, hafnia, alumina or combinations of zirconia and hafnia (i.e., mixtures thereof). Ceramic metal oxides suitable for use with the present invention typically have a melting point that is typically at least about 2600° F (1426° C), and more typically in the range of from about from about 3450° F to about 4980° F (from about 1900° C to about 2750° C). The ceramic metal oxide may comprise up to about 100 mole % zirconia, up to about 100 mole % hafnia, up to about 100 mole % alumina, or any percentage combination of zirconia and hafnia that is desired. One embodiment of the present invention includes ceramic metal oxide comprising from about 85 to 100 mole % zirconia and from 0 to about 15 mole % hafnia, more typically from about 95 to 100 mole % zirconia and from 0 to about 5 mole % hafnia. The ceramic metal oxide is formed from a ceramic metal oxide precursor. Ceramic metal oxide precursor refers to any composition, compound, molecule, etc., that is converted into or forms the ceramic metal oxide. For example the ceramic metal oxide precursor may include a zirconia compound, such as zirconyl nitrate.

All amounts, parts, ratios and percentages used herein are by mole % unless otherwise specified.

The turbine component for which the ceramic corrosion resistant coatings of this invention are particularly advantageous are those that experience a service operating temperature of at least about 1000° F (538° C), more typically at least about 1200° F (649° C), and typically in the range of from about 1000 °F to about 1800 °F (from about 538 °C to about 982° C). These components have at least some exposure to bleed air (e.g., air extracted from the compressor to cool hotter components in the engine) having ingested corrosive components, typically metal sulfates, sulfites, chlorides, carbonates, etc., that can deposit on the surface of the component.

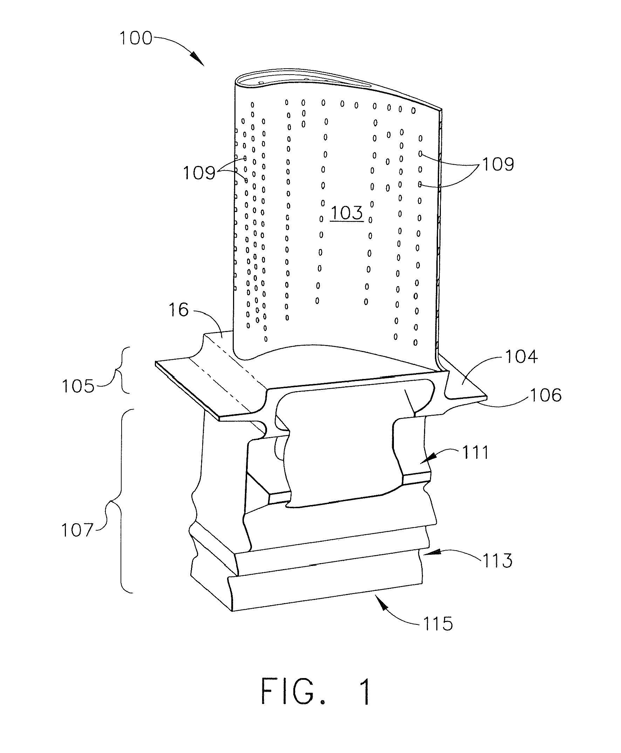

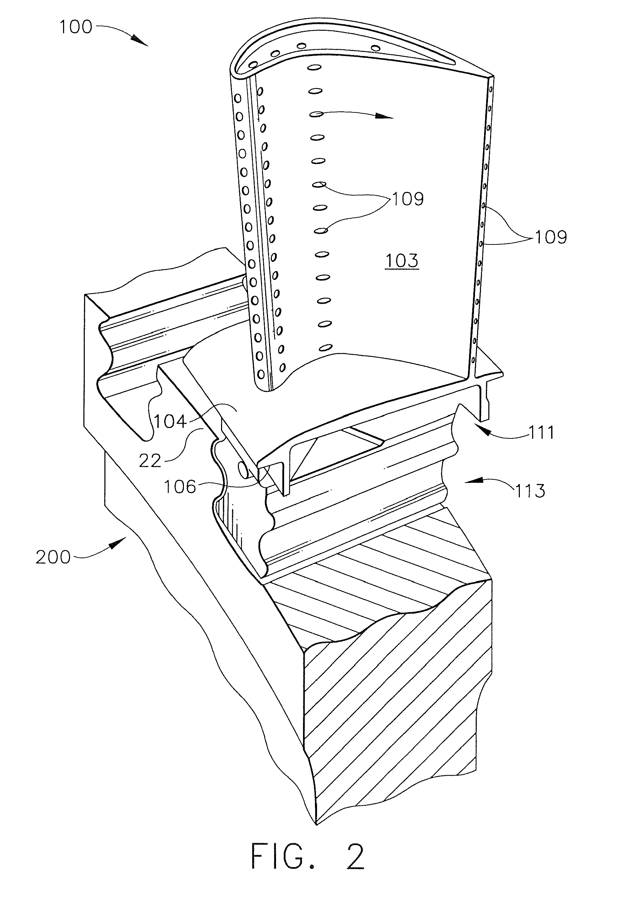

One embodiment of a turbine airfoil that can be used with the method of the present invention includes turbine blade 100 shown in FIG. 1 and 2. As is known in the art, the turbine blade 100 has three sections: an airfoil section 103, a platform section 105, and a dovetail section 107. The airfoil section 103 includes a plurality of cooling holes 109, which permit cooling air to exhaust from an interior space of the turbine blade 100. The platform section includes a top surface 104 and an underside surface 106. There are two portions to the dovetail section 107, the shank 111 and the root portion 113, which includes the dovetails for engagement with the turbine disk 200. At one end of the root portion 113, cooling intake holes 115 allow cooling air to enter the interior space of the turbine blade 100 for purposes of cooling. In addition to entering the turbine blade 100, the cooling air may also come into contact with under-platform surfaces, such as the underside surface 106, the surface of the shank 111 and the surface of the dovetail section 107. The turbine blade 100 is typically fabricated from a high temperature corrosion resistant alloy, such as a nickel-based superalloy. The exterior surface of airfoil section 103 of the turbine blade 100 may be coated with any coating system known in the art for coating on a turbine blade 100 opposed to combustion gases. A known coating system includes a bond coat on the surface of the turbine blade 100, typically comprising an aluminide, and a thermal barrier layer disposed on the bond coating, which may include ceramic materials, such as yttria stabilized zirconia. The thermal barrier coating is typically applied by a process, such as air plasma spray or electron beam physical vapor deposition, that provides the surface with a coating morphology suitable for providing the airfoil section 103 surface with resistance to heat. The combination of the bond coating and thermal barrier layer provide the airfoil section 103 with resistance to heat and corrosion resulting from contact with the combustion gas stream.

The present invention includes a ceramic corrosion resistant coating applied to under-platform surfaces or internal surfaces not in direct contact with the combustion gas stream, but may come into contact with cooling air. Under-platform surfaces suitable for receiving the coating of the present invention include the underside surface 106 of the platform section 105, and the surface of the shank 111. Other surfaces, such as the root portion 113 may also be coated. However, when the root portion 113 is coated, it may be desirable to mask areas of the root portion, such as the portions of the dovetail that engage the turbine disk 200, that are subject to sliding friction and/or wear. In addition, internal passageways present in the turbine blade or vane, such as passages for conveying cooling air, are suitable for receiving the coating of the present invention.

The coating system according to the present invention includes a turbine blade with under-platform components or internal surfaces protected from degradation, such as corrosion pitting that may lead to fatigue crack propagation. The resistance to the corrosion is provided by a ceramic corrosion resistant coating. In addition to under-platform surfaces of the turbine blade 100, other surfaces, such as turbine vane surfaces and turbine shroud that are not directly in contact with the combustion gas flow also benefit from coating with the present invention.

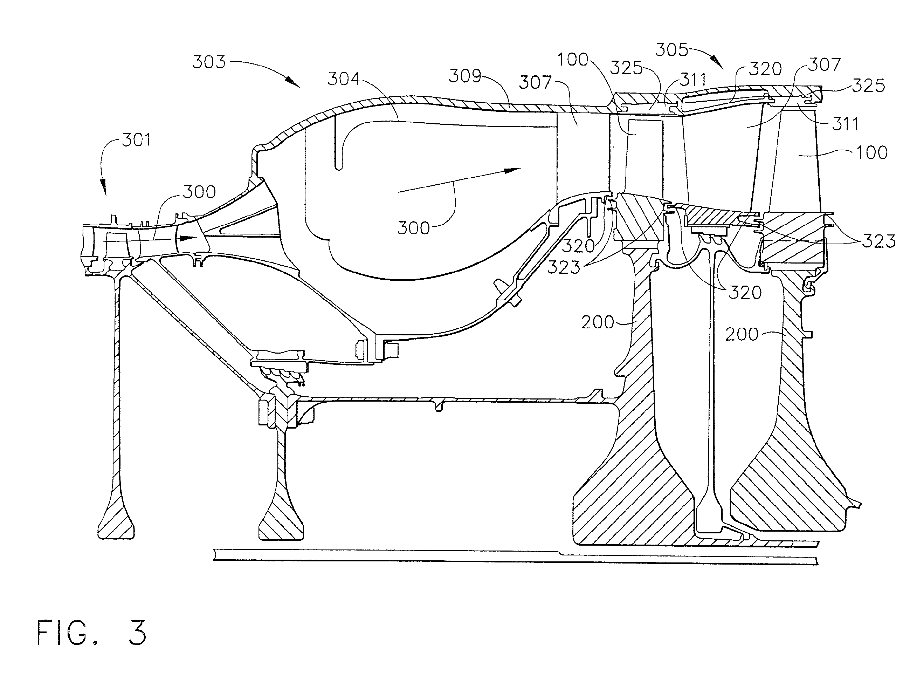

FIG. 3 shows a cutaway view of a combustor and high pressure turbine section of a gas turbine engine. Air 300 leaves the high pressure compressor section 301 of the gas turbine engine and enters combustor section 303, wherein fuel is mixed with the air in the combustor 304 wherein combustion takes place. The air 300 then enters the high pressure turbine section 305, wherein the air 300 and gases of combustion are directed by vane 307 prior to contacting turbine blade 100. The turbine blade 100 is engaged with turbine disk 200 and rotates within the gas turbine engine casing 309. The air 300, including fuel and combustion products, travels into the second stage turbine section 305 forming the combustion gas path wherein the exterior surfaces of turbine vanes 307 and turbine blades 100 are exposed to an extremely high temperature corrosive environment. The turbine blade 100 extends across the combustion gas flow path to a shroud 311 mounted within casing 309, which provides a sealing surface to minimize leakage around the turbine blade 100. While not exposed to the direct combustion gas flow, under-platform surfaces are exposed to cooling air that is bled from the compressor to cool the turbine components. This cooling air, including contaminants contained therein, comes into contact with under-platform surfaces, such as the vanes under-platform surface 320, the turbine blades under-platform surface 323 and the shrouds under-platform surface 325. Contaminants from the cooling air may tend to deposit and accumulate at these various under-platform regions during engine operation. The present invention coats one or more of the vanes under-platform surface 320, the turbine blades under-platform surface 323 and the shrouds under-platform surface 325 with a ceramic corrosion resistant coating.

The coating of the present invention is preferably applied by a sol-gel process or similar liquid dispersion deposition process. The resultant film is a thin film of dense ceramic metal oxide, preferably a stabilized ceramic metal oxide. The porosity of the coating is up to about 25%. The porosity is preferably up to about 20% porosity at a coating thickness of about 0.5 mils. The coating is sufficiently dense to substantially prevent infiltration of corrosion species to the substrate or underlying environmental coating. The corrosion species from which the substrate is being protected typically includes sulfates, sulfites, carbonates, chlorides, and other corrosive species that are solid at the operating temperatures of the gas turbine engine. Up to about 5% of the corrosive species may be in the form of a liquid at the operating temperatures, with the liquid having a viscosity such that infiltration of the porosity of the ceramic coating is slow or nonexistent when the coating porosity is about 20% porosity. The ceramic coating according to the present invention has a thickness up to about 127 microns, preferably having a thickness of less than 50 microns, including about 25 microns. The thickness is preferably provided such that the weight of the coating is minimized while providing the required protection and the centrifugal forces created by the added weight is minimized.

In a preferred embodiment of the invention, an aluminide coating, including aluminide or platinum aluminide, is provided to the surface of the turbine component. A preferred surface for application includes the under-platform structure or internal surfaces of a turbine blade. The ceramic corrosion resistant coating is applied to the surface of the aluminide coating as used herein, aluminide includes both aluminide coatings and noble metal modified aluminide coatings such as platinum aluminide. The ceramic corrosion resistant coating adheres to the platinum aluminide coating and provides corrosion resistance. In addition, the ceramic corrosion resistant coating of the present invention may be applied directly to the under-platform or internal passage substrate material or may be applied to under-platform or internal passage coatings, including, but not limited to chromide coatings, MCrAlY coatings and platinum coatings.

The ceramic corrosion resistant coating is preferably sufficiently thin to provide resistance to cracking and spallation during the thermal cycling experienced during gas turbine engine operation. In an alternate embodiment, multiple layers of the ceramic corrosion resistant coating, or by incorporation of fine particular ceramic metal oxide or stabilized ceramic metal oxide in the sol-gel solution prior to application, may be applied to increase the thickness of the coating to provide a coating that provides a dense corrosion resistant barrier. The use of multiple coatings and/or incorporation of fine particulate ceramic metal oxide or stabilized ceramic metal oxide permits the thickness of the coating to exceed 25 microns, while maintaining high coating density.

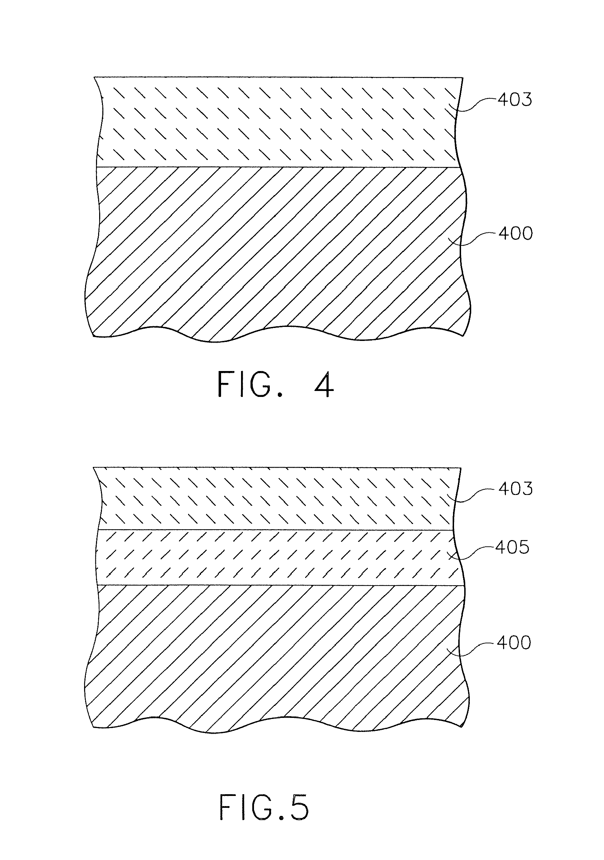

FIG. 4 and 5 depict cross-sections of coating systems according to embodiments of the present invention. FIG. 4 shows a substrate 400 having a ceramic corrosion resistant coating 403 disposed on a surface thereof. The substrate 400 is preferably a turbine blade under-platform surface 323, turbine vane under-platform surface 320 or shroud under-platform surface 325 or other internal surfaces not specifically described herein. The ceramic corrosion resistant coating 403 preferably is a zirconia, hafnia, or alumina containing, stabilized ceramic corrosion resistant coating 403. FIG. 5 shows a coating system according to the present invention including a substrate 400 having a bond coating 405, such as diffusion aluminide disposed thereon. A ceramic corrosion resistant coating 403 is disposed on the surface of the bond coating 405. The bond coating 405 may be present to provide oxidation resistance and/or additional corrosion resistance.

The method of the present invention includes a sol-gel process for depositing a ceramic corrosion resistant coating 403 containing a ceramic metal oxide on an under-platform surface of a turbine blade of a gas turbine engine. In forming the ceramic corrosion resistant coating 403 of this invention on a surface of metal substrate 400, the surface is typically pretreated mechanically, chemically or both to make the surface more receptive for ceramic corrosion resistant coating 403. The surface of substrate 400 may further include a bond coating, such as diffusion aluminide, which is applied by any suitable coating process known in the art. The underlying bond coating 405 may provide oxidation resistance and/or additional corrosion resistance and protection for the underlying substrate 400. The pretreatment may be applied to the surface of the substrate 400, to the surface of the bond coating 405, if present, or on a combination thereof.

Suitable pretreatment methods include grit blasting, with or without masking of surfaces that are not to be subjected to grit blasting, micromachining, laser etching, treatment with chemical etchants such as those containing hydrochloric acid, hydrofluoric acid, nitric acid, ammonium bifluorides and mixtures thereof, treatment with water under pressure (i.e., water jet treatment), with or without loading with abrasive particles, as well as various combinations of these methods. One type of pretreatment includes grit blasting where the surface is subjected to the abrasive action of silicon carbide particles, steel particles, alumina particles or other types of abrasive particles. These particles used in grit blasting are typically alumina particles and typically have a particle size of from about 600 to about 35 mesh (from about 25 to about 500 micrometers), more typically from about 400 to about 35 mesh (from about 38 to about 500 micrometers).

After pretreatment, and when applicable, application of the aluminide coating, the sol-gel deposition of the ceramic corrosion resistant coating takes place according to known sol-gel processing steps. See commonly assigned U.S. Patent Application No. 2004/0081767 (Pfaendtner et al.), published April 29, 2004 and US 6884476, which is herein incorporated by reference in its entirety. The sol-gel processing of the present invention includes a precursor chemical solution that produces a ceramic metal oxide. A chemical gel-forming solution which typically comprises an alkoxide precursor or a metal salt is combined with ceramic metal oxide precursor materials, as well as any stabilizer metal oxide precursor materials. A gel is formed as the gel-forming solution is preferably heated to slightly dry it at a first preselected temperature for a first preselected time. The gel is then applied over the surface of metal substrate 400 or the surface of bond coating 405. Proper application of the ceramic metal oxide precursor materials and proper drying produce a continuous film over the coated surface. The sol-gel can be applied to the surface of substrate 400 by any suitable technique. For example, the sol-gel can be applied by spraying at least one thin layer, e.g., a single thin layer, or more typically a plurality of thin layers to build up a film to the desired thickness for ceramic corrosion resistant coating 403. The gel is then fired at a second elevated preselected temperature above the first elevated temperature for a second preselected time to form coating 403. No layer of ceramic corrosion resistant coating 403 comprises a dense matrix that has a thickness of up to about 5 mils (127 microns) and typically from about 0.02 to about 2 mils (from about 0.5 to about 51 microns), more typically from about 0.04 to about 1.5 mils (from about 1 to about 38 microns). Optionally, inert oxide filler particles can be added to the sol-gel solution to enable a greater per-layer thickness to be applied to the substrate 400. The sol gel coating of the present invention is deposited from a ceramic metal oxide precursor and ceramic metal oxide stabilizer precursor, preferably including a zirconium source and a yttrium source. Suitable ceramic metal precursors include, but are not limited to, zirconyl nitrate, zirconium acetate, zirconia oxychlorate, zirconium n-propoxide and combinations thereof. Other ceramic metal oxide precursors, such as hafnium or aluminum, containing salts may also be used. Suitable ceramic metal stabilizer precursors include, but are not limited to, yttrium nitrate, yttrium noideconate, and yttrium methoxide. The oxide and stabilizer precursor mixture forms a polymeric film having a dense structure, which, when cured, forms a dense ceramic corrosion resistant coating, which is resistant to hot corrosion and is capable of withstanding the operating temperatures and conditions of the under-platform components of gas turbine engines. If desired, additional layers can be deposited over the initial layer. In order to obtain the additional thickness, the additional layers may be applied onto cured and/or dried underlying layers.

A sealant layer may be applied over layer 403. The sealant layer acts to seal the open porosity both during manufacturing from oils, greases, lubricants and other such manufacturing or assembly aid liquids and optionally during engine operation from low viscosity corrodant that may penetrate open porosity. The sealant layer may be composed of a variety materials that form a continuous surface to seal the porosity in layer 403. The materials suitable for the sealant layer may include compositions that are stable at elevated temperature to provide protection both during manufacturing/assembly and engine operation such as metal phosphate glasses such as SERMASEAL^{®} 565 or SERMASEAL^{®} 570A available from Sermatech International or ALSEAL^{®} 598 offered by Coatings for Industry, or a layer of the sol-gel composition defined in this invention without the presence of particulate. SERMASEAL^{®} is a federally registered trademark of Teleflex Incorporated, Limerick, Pennsylvania for organic and inorganic bonding coatings. ALSEAL^{®} is a federally registered trademark of Coatings For Industry, Inc., Souderton, Pennsylvania for coating compositions for metals. Alternately, these materials may include organic compositions that are not stable at elevated temperature to provide protection during manufacturing/assembly but will burn away harmlessly during initial engine operation such as unpigmented acrylic paint, unpigmented polyurethane paint and unpigmented latex paint.

The coating may be applied by any suitable application method including, but not limited to, spraying, brushing, rolling or dipping the substrate 400 in the coating composition. The application may take place at room temperature. Thereafter, the film is heat treated at a temperature from about 250° C to about 1080° C to convert the polymeric precursor solution to an oxide ceramic comprising ceramic corrosion resistant coating 403.

The room temperature application of the precursor containing polymeric film is easily accomplished and permits the coating of components having complex 3-dimensional geometry with a substantially uniform coating thickness and substantially uniform coating composition.

### EXAMPLE

A ceramic corrosion resistant comprising yttria stabilized zirconia (YSZ) was applied to a nickel-chromium-iron superalloy surface. 32 EthOH was provided to a reaction vessel. 8.77 grams of zirconyl nitrate was added to the EthOH and is stirred at 250 rpm. The reaction mixture was heated to 60° C with refluxing of condensate and the mixture is stirred until the mixture was visually transparent. 3.57 mL of yttrium methoxide was slowly added to the mixture and the mixture was stirred at 400 rpm until the yttrium methoxide appeared to be dissolved and the mixture was substantially transparent and tinted. The reaction mixture was then cooled to provide the mixture suitable for application to the substrate.

The mixture provided above was loaded into an air spray gun and applied uniformly to the INCONEL^{®} alloy 601, nickel-chromium-iron superalloy surface. INCONEL^{®} is a federally registered trademark owned by Huntington Alloys Corporation of Huntington, West Virginia. Alloy 601 has a well-known alloy composition. The coated surface was then heat treated at a temperature greater than 250° C until the YSZ coating was formed.

The YSZ coated sample from the above example was subjected to corrosion testing wherein a sulfate containing corrodant is applied to the surface of the coating and run through a 2-hour cycle at 1300° F (704° C). The corrodant was removed by water washing and the coated sample was then inspected for damage. This corrosion application, thermal exposure, cleaning and inspection cycle was repeated until the coated sample shows signs of damage. After 8 cycles no appreciable damage was noted on the coated sample. After 10 cycles, the coating was still adherent to the alloy, but discoloration was noted and the coated sample was cross-sectioned for evaluation. After cross-sectioning, a corrosion production layer approximately 10 microns thick was found between the coating and the alloy substrate. For comparison, a bare alloy of INCONEL® alloy 601 was subjected to the same corrosion testing as the above example. The bare alloy (i.e., no coating) exhibited a corrosion production layer that was visible after approximately 2 cycles of corrosion testing.

While the invention has been described with reference to a preferred embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

For completeness, various aspects of the invention are now set out in the following numbered clauses:
1. A high pressure turbine component for use in a gas turbine engine comprising:
   a sol-gel ceramic corrosion resistant coating disposed on a surface of the component;
   wherein the surface is outside of the combustion gas stream during operation of the gas turbine engine and exposed to cooling air; and
   wherein the coating has a thickness of up to about 127 microns and remains adherent at temperatures greater than 1000 °F.
2. The component of clause 1, wherein the ceramic corrosion resistant coating comprises a ceramic metal oxide selected from the group consisting of zirconia, hafnia, alumina and mixtures thereof.
3. The component of clause 1 wherein the component is selected from the group consisting of a turbine blade, a turbine vane, a turbine shroud and combinations thereof.
4. The component of clause 3, wherein the component is a turbine blade and the surface is selected from the group consisting of the underside surface of the turbine blade platform, the exterior surface of the shank, the exterior surface of the dovetail, internal cooling surfaces, and combinations thereof.
5. The component of clause 3, wherein the component is a turbine vane, wherein the surface is an underplatform surface of the vane and internal cooling surfaces.
6. The component of clause 3, wherein the component is a turbine shroud and the surface is an underplatform surface of the shroud.
7. The component of clause 1 wherein the ceramic corrosion resistant coating comprises from about 60 to about 98 mole % ceramic metal oxide and from about 2 to about 40 mole % of a stabilizer metal oxide.
8. The component of clause 7 wherein the stabilizer metal oxide is selected from the group consisting of yttria, calcia, scandia, magnesia, india, rare earth metal oxides, lanthana, tantala, titania, and mixtures thereof.
9. The component of clause 7 wherein the corrosion resistant coating comprises from about 94 to about 97 mole % ceramic metal oxide and from about 3 to about 6 mole % yttria.
10. The component of clause 1 wherein the ceramic corrosion resistant coating is formed on a preselected portion of the component.
11. The component of clause 1 wherein the component surface comprises a metallic bond coating overlying a substrate.
12. The component of clause 1 wherein the ceramic corrosion resistant coating has a thickness up to about 51 microns.
13. A method comprising the following steps:
   (a) providing a turbine component comprising a metallic surface outside of the combustion gas stream and exposed to cooling air during operation of the gas turbine engine;
   (b) providing a gel-forming solution including a ceramic metal oxide precursor;
   (c) heating the gel-forming solution to a first preselected temperature for a first preselected time to form a gel;
   (d) depositing the gel on the metallic surface; and then
   (e) firing the deposited gel at a second preselected temperature above the first preselected temperature to form a ceramic corrosion resistant coating comprising a ceramic metal oxide, wherein the ceramic metal oxide is selected from the group consisting of zirconia, hafnia, alumina and combinations thereof.
14. The method of clause 13 wherein step (d) is carried out by applying at least one layer of the gel on the metal substrate.
15. The method of clause 13 wherein steps (b)-(e) are repeated to apply a plurality of layers of the gel on the metal substrate.
16. The method of clause 13 wherein the gel-forming solution provided in step (b) further includes inert oxide filler particles.
17. The method of clause 13 wherein after step (e), the ceramic corrosion resistant coating has a thickness of up to about 51 microns.
18. The method of clause 13, further comprising masking preselected portions of the component to prevent deposition of the corrosion resistant coating on the preselected portions.
19. The method of clause 13 wherein the component is selected from the group consisting of a turbine blade, a turbine vane, a turbine shroud and combinations thereof.
20. The method of clause 19, wherein the component is a turbine blade and the surface is selected from the group consisting of the underside surface of the turbine blade platform, the exterior surface of the shank, the exterior surface of the dovetail, internal cooling surfaces, and combinations thereof.
21. The method of clause 13 further comprising applying a bond coating to the surface of the component.
22. A method for coating a high pressure turbine component for use in a gas turbine engine comprising:
   applying a sol-gel ceramic corrosion resistant coating having a thickness of up to about 127 microns to a surface of the component;
   wherein the surface is outside of the combustion gas stream during operation of the gas turbine engine and exposed to cooling air; and
   wherein the coating remains adherent at temperatures greater than 1000 °F.
23. The method of clause 22 wherein the ceramic corrosion resistant coating comprises a ceramic metal oxide selected from the group consisting of zirconia, hafnia, alumina and mixtures thereof.
24. The method of clause 22 wherein the ceramic corrosion resistant coating has a thickness of up to about 51 microns.
25. The method of clause 22, further comprising masking preselected portions of the component to prevent deposition of the corrosion resistant coating on the preselected portions.
26. The method of clause 22 wherein the component is selected from the group consisting of a turbine blade, a turbine vane, a turbine shroud and combinations thereof.
27. The method of clause 26, wherein the component is a turbine blade and the surface is selected from the group consisting of the underside surface of the turbine blade platform, the exterior surface of the shank, the exterior surface of the dovetail, internal cooling surfaces, and combinations thereof.
28. The method of clause 22, wherein the component is a turbine vane, wherein the surface is an underplatform surface of the vane and internal cooling surfaces.
29. The method of clause 22, wherein the component is a turbine shroud and the surface is an underplatform surface of the shroud.
30. The method of clause 22 wherein the ceramic corrosion resistant coating comprises from about 60 to about 98 mole % ceramic metal oxide and from about 2 to about 40 mole % of a stabilizer metal oxide.
31. The method of clause 30 wherein the stabilizer metal oxide is selected from the group consisting of yttria, calcia, scandia, magnesia, india, rare earth metal oxides, lanthana, tantala, titania, and mixtures thereof.
32. The component of clause 31 wherein the corrosion resistant coating comprises from about 94 to about 97 mole % ceramic metal oxide and from about 3 to about 6 mole % yttria.
33. The method of clause 22 further comprising applying a bond coating to the surface of the component.

## Claims

1. A high pressure turbine component for use in a gas turbine engine comprising:
a sol-gel ceramic corrosion resistant coating disposed on a surface of the component;
wherein the surface is outside of the combustion gas stream during operation of the gas turbine engine and exposed to cooling air; and
wherein the coating has a thickness of up to about 127 microns and remains adherent at temperatures greater than 1000 °F.

2. The component of claim 1, wherein the ceramic corrosion resistant coating comprises a ceramic metal oxide selected from the group consisting of zirconia, hafnia, alumina and mixtures thereof.

3. The component of claim 1 or claim 2, wherein the component is selected from the group consisting of a turbine blade, a turbine vane, a turbine shroud and combinations thereof.

4. The component of claim 3, wherein the component is a turbine blade and the surface is selected from the group consisting of the underside surface (106) of the turbine blade platform, the exterior surface of the shank (111), the exterior surface of the dovetail (107), internal cooling surfaces, and combinations thereof, or wherein the component is a turbine vane, wherein the surface is an underplatform surface of the vane and internal cooling surfaces, or wherein the component is a turbine shroud and the surface is an underplatform surface (106) of the shroud.

5. The component of any preceding claim, wherein the ceramic corrosion resistant coating comprises from about 60 to about 98 mole % ceramic metal oxide and from about 2 to about 40 mole % of a stabilizer metal oxide.

6. The component of claim 5 wherein the stabilizer metal oxide is selected from the group consisting of yttria, calcia, scandia, magnesia, india, rare earth metal oxides, lanthana, tantala, titania, and mixtures thereof.

7. The component of claim 5 wherein the corrosion resistant coating comprises from about 94 to about 97 mole % ceramic metal oxide and from about 3 to about 6 mole % yttria.

8. The component of claim 1 wherein the ceramic corrosion resistant coating is formed on a preselected portion of the component.

9. The component of claim 1 wherein the component surface comprises a metallic bond coating overlying a substrate.

10. A method comprising the following steps:
(a) providing a turbine component comprising a metallic surface outside of the combustion gas stream and exposed to cooling air during operation of the gas turbine engine;
(b) providing a gel-forming solution including a ceramic metal oxide precursor;
(c) heating the gel-forming solution to a first preselected temperature for a first preselected time to form a gel;
(d) depositing the gel on the metallic surface; and then
(e) firing the deposited gel at a second preselected temperature above the first preselected temperature to form a ceramic corrosion resistant coating comprising a ceramic metal oxide, wherein the ceramic metal oxide is selected from the group consisting of zirconia, hafnia, alumina and combinations thereof.
